(19) Europäisches Patentamt / European Patent Office / Office européen des brevets

(11) **EP 4 779 852 A1**

(12) **EUROPEAN PATENT APPLICATION**
published in accordance with Art. 153(4) EPC

(43) Date of publication:
**22.07.2026 Bulletin 2026/30**

(21) Application number: **24944085.0**

(22) Date of filing: **24.07.2024**

(51) International Patent Classification (IPC):
**H02K 49/10** (2006.01)    **H02K 1/17** (2006.01)
**H02K 1/2783** (2022.01)

(86) International application number:
**PCT/CN2024/107276**

(87) International publication number:
**WO 2026/000507 (02.01.2026 Gazette 2026/01)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **27.06.2024 CN 202410858162**

(71) Applicant: **Jiande Wuxing Bicycle Co., Ltd.**
**Hangzhou, Zhejiang 311604 (CN)**

(72) Inventors:
• **FANG, Weizhong**
**Hangzhou, Zhejiang 310008 (CN)**
• **PAN, Zhi**
**Hangzhou, Zhejiang 311604 (CN)**
• **PAN, Ye**
**Hangzhou, Zhejiang 311604 (CN)**
• **CAO, Jingkuan**
**Hangzhou, Zhejiang 311604 (CN)**
• **ZHANG, Zhiguang**
**Hangzhou, Zhejiang 311604 (CN)**
• **ZHANG, Haiwa**
**Hangzhou, Zhejiang 311604 (CN)**

(74) Representative: **Cabinet Beau de Loménie**
**103, rue de Grenelle / CS 90800**
**75340 Paris Cedex 07 (FR)**

(54) **MAGNETIC TRANSMISSION SPEED-REDUCTION APPARATUS AND MID-DRIVE ELECTRIC MOTOR FOR POWER-ASSISTED BICYCLE**

(57)    The present invention discloses a magnetic transmission speed-reduction device and a mid-drive motor of a power-assisted bicycle, and belongs to power assistance techniques for bicycles. Existing mid-drive motors have a large size, low rotation efficiency and loud operating noise. In the present invention, a modulation ring is disposed between a first rotor and a first stator, and power is transmitted by means of a magnetic-field coupling effect; a first air gap is formed between the modulation ring and the first stator, and a second air gap is formed between the modulation ring and the first rotor; during operation, a motor drives the first rotor to rotate, magnetic fields generated by the first rotor and the first stator are respectively modulated by the modulation ring to generate a series of spatial harmonic magnetic fields in the first air gap and the second air gap, and a stable output torque is generated on the modulation ring by magnetic-field coupling, thereby achieving the effects of speed reduction and torque amplification. Due to the friction-free characteristic of magnetic transmission and the ultra-high torque density achieved by the magnetic flux concentration structure and high-magnetic-permeability material of the present invention, system efficiency is improved, and operating noise is reduced.

FIG. 4

**Description**

Field of the Invention

The present invention belongs to power assistance techniques for mid-drive motors of power-assisted bicycles, and particularly relates to a magnetic transmission speed-reduction device and a mid-drive motor for a power-assisted bicycle.

Background of the Invention

The mid-drive motor of power-assisted bicycles or bicycles generally outputs power after being slowed down by a speed-reduction device. The speed-reduction device is a gear speed-reduction device, a cycloid pinwheel speed-reduction device or a harmonic speed-reduction device, leading to a large size, low rotation efficiency, loud operating noise and a short service life of the mid-drive motor.

Summary of the Invention

The technical issue to be settled by the present invention and the technical task proposed by the present invention are to overcome at least one of the defects of the large size, low rotation efficiency, loud operating noise and short service life of mid-drive motors in the prior art by providing a magnetic transmission speed-reduction device and a mid-drive motor for a power-assisted bicycle, which realize speed reduction by magnetic transmission to fulfill the purpose of the present invention.
To fulfill the above purpose, the present invention provides a magnetic transmission speed-reduction device, including a first stator, a first rotor and a modulation ring, where: the first stator includes a first stator magnetic pole assembly, and the first stator magnetic pole assembly is used for providing a constant first stator magnetic field;

the first rotor includes a first rotor magnetic pole assembly, the first rotor magnetic pole assembly is used for providing a first rotor magnetic field for rotation with the first rotor, and the first rotor is located on an inner side of the first stator and is coaxial with the first stator;
the modulation ring is located between the first rotor and the first stator and is coaxial with the first rotor and the first stator, a first air gap is formed between the modulation ring and the first stator, and a second air gap is formed between the modulation ring and the first rotor;
the first stator and the first rotor are provided with different numbers of pole pairs, such that a magnetic field of the first air gap and a magnetic field of the second air gap are coupled to slow down and output rotation from the first rotor by means of the modulation ring.

The present invention achieves speed reduction by magnetic transmission and increases the maximum output torque under the condition that the installation space of a mid-drive motor is limited, thereby improving the operating efficiency of the motor and reducing the overall noise of the motor.
Preferably, a magnetic flux of the magnetic field of the first stator is concentrated inwardly, and a magnetic flux of the magnetic field of the first rotor is concentrated outwardly. Particularly, the magnetic field of the first stator magnetic pole assembly and the magnetic field of the first rotor magnetic pole assembly are both configured in the form of a Halbach Array. In this way, the field intensity of the space where the modulation ring is located is greatly increased.
Preferably, the first rotor magnetic pole assembly is formed by first rotor permanent magnets, which are spliced together after being magnetized one-by-one, with each pole being divided into four first rotor permanent magnets and a magnetic flux being concentrated outwardly on the whole; the first stator magnetic pole assembly is formed by first stator permanent magnets, which are spliced together after being magnetized one-by-one, with each pole being divided into two first stator permanent magnets which are magnetized radially and tangentially respectively, and a magnetic flux being concentrated inwardly on the whole. In this way, high-intensity magnetic fields are provided to achieve transmission of a large torque.
Preferably, the number of the pole pairs of the first rotor is p1, the first rotor includes $8 \times p1$ first rotor permanent magnets, and an angle between magnetization directions of every two adjacent first rotor permanent magnets is $(45\text{-}360/(8 \times p1))°$. In this way, the utilization of magnetic force is maximized, and the ease of process implementation is guaranteed.
Preferably, axial projection contours of the first rotor permanent magnets are fan-shaped, the first rotor permanent magnets are identical in size, a radial thickness of the first rotor permanent magnets is H1, a circumferential mean width of the first rotor permanent magnets is W1, and H1/W1=0.8-1.5. In this way, the utilization of magnetic force is maximized, and the technological feasibility is guaranteed.

Preferably, the first stator permanent magnets adopt any one of the following configurations:

(1) Axial projection contours of the first stator permanent magnets are fan-shaped and identical in size, the first stator permanent magnets are divided into radial permanent magnets and tangent permanent magnets, the radial permanent magnets are magnetized radially, the tangent permanent magnets are magnetized tangentially, the radial permanent magnets and the tangent permanent magnets are spliced alternately to form the first stator magnetic pole assembly, magnetization directions of every two adjacent radial permanent magnets are opposite, and magnetization directions of every two adjacent tangent permanent magnets are opposite; a radial thickness of the first stator permanent magnets is H3, a circumferential mean width of the first stator permanent magnets is W3, and W3/H3=0.52-0.6. In this way, the magnetic path is optimized, and the output torque is maximized.

(2) Axial projection contours of the first stator permanent magnets are fan-shaped, the first stator permanent magnets are divided into large-sized permanent magnets and small-sized permanent magnets, the large-sized permanent magnets are magnetized radially, the small-sized permanent magnets are magnetized tangentially, the large-sized permanent magnets and the small-sized permanent magnets are spliced alternately to form the first stator magnetic pole assembly, magnetization directions of every two adjacent large-sized permanent magnets are opposite, and magnetization directions of every two adjacent small-sized permanent magnets are opposite; an included angle between two radial edges of each of the small-sized permanent magnets is D2, and a radial thickness of the small-sized permanent magnets is H5; an included angle between two radial edges of each of the large-sized permanent magnets is D3, and a radial thickness of the large-sized permanent magnets is H6; 1.5<D3/D2<2.2, 0.4<H6/H5<0.6. In this way, the output torque is maximized, and less magnets are used.

(3) Axial projection contours of the first stator permanent magnets are triangular, the first stator permanent magnets are divided into angular centripetal permanent magnets and edge centripetal permanent magnets, the edge centripetal permanent magnets are magnetized radially, the angular centripetal permanent magnets are magnetized tangentially, the angular centripetal permanent magnets and the edge centripetal permanent magnets are spliced alternately to form the first stator magnetic pole assembly, magnetization directions of every two adjacent angular centripetal permanent magnets are opposite, magnetization directions of every two adjacent edge centripetal permanent magnets are opposite, edges of the angular centripetal permanent magnets form an outer edge of the first stator magnetic pole assembly, edges of the edge centripetal permanent magnets form an inner edge of the first stator magnetic pole assembly, and adjacent edges of the angular centripetal permanent magnets and the edge centripetal permanent magnets have a same length and are completely aligned; an outer diameter of the first stator is d5, an inner diameter of the first stator is d4, the number of the pole pairs of the first stator is p3, and $0.8 \times d4 \times \sin(360deg/4p3) < d5-d4 < 0.9 \times d4 \times \sin(360deg/4p3)$. In this way, the magnetic path is optimal, the inward magnetic flux concentration effect is the best, and the torque density is the highest.

Preferably, the modulation ring includes modulation teeth, and the modulation teeth are made from a material with a high saturation magnetic flux density. In this way, the maximum output torque (i.e., the torque density) of the speed-reduction device is greatly increased under the condition that the size of the installation space is fixed; the torque is transmitted by magnetic fields, such that friction is avoided. A mechanical loss is avoided, thereby improving the operating efficiency of the motor, and reducing the overall noise of the motor.

Preferably, the modulation ring includes a cage, the cage includes two end plates and a plurality of connecting rods connected between the two end plates, the connecting rods extend in an axial direction and distributed in a circumferential direction, and each of the modulation teeth is fixed in a gap between two adjacent connecting rods. In this way, the overall strength of the modulation ring is guaranteed.

Preferably, the modulation teeth are identical in size, the total number of the modulation teeth is p2, axial projection contours of the modulation teeth are fan-shaped, an included angle between two radial edges of each of the modulation teeth is D1, and D1/(360deg/p2)=0.5-0.6; a radial thickness of the modulation teeth is H2, a circumferential mean width of the modulation teeth is W2, and H2/W2=0.55-1.3. In this way, the modulation effect is optimized.

Preferably, the connecting rods are cylindrical, arc grooves are formed in middle positions of two circumferential sides of each of the modulation teeth, and the arc grooves are attached to surfaces of the connecting rods, such that the connecting rods and the cylindrical connecting rods are mutually supported. In this way, the overall structural strength of the modulation ring after installation is improved without compromising the modulation effect.

Preferably, the number of the pole pairs of the first rotor is p1, the total number of the modulation teeth is p2, the number of the pole pairs of the first stator is p3, and p1=|p2-p3|.

Preferably, the first stator is fixed in a motor housing, and a shielding ring is inlaid in an inner wall of the motor housing to reduce flux leakage from the motor housing. Due to the high outward magnetic flux concentration ability of the first rotor, a large eddy-current loss will be caused in the motor housing. By inlaying the shielding ring in the inner wall of the motor housing, the thickness of the motor housing may be decreased, and the shielding ring fulfills a magnetic field shielding effect while the overall strength of the motor housing is guaranteed, thereby effectively reducing the eddy current in the motor housing.

Preferably, a thickness H4 of the shielding ring, an outer diameter d1 of the first rotor, an inner diameter d5 of the shielding ring and the number p1 of the pole pairs of the first rotor satisfy the following formulae:
$d5-d1<1\times\sin(360\deg/4p1)$, $H4\geq0.185\times d1\times(1+\sin(360\deg/4p1))-0.5\times d5$. In this way, the shielding ring effectively shields the magnetic field to reduce the eddy-current loss.

If $d5-d1>d1\times\sin(360\deg/4p1)$, the shielding ring may be omitted.

Preferably, the shielding ring is divided into N segments in an axial direction, an axial length of each segment of the shielding ring is L1, an axial length of the first stator magnetic pole assembly is L, all the segments of the shielding ring are uniformly distributed in the axial direction, an end of the shielding ring is aligned with the first stator magnetic pole assembly, a distance between end surfaces, close to each other, of every two segments of the shielding ring is (L-N*L1)/(N-1), and L1>0.65*(L/N), N<10. In this way, the weight of the shielding ring may be further reduced, and the torque loss caused by the magnetic shielding effect may be reduced to some extent.

To fulfill the above purpose, the present invention provides a mid-drive motor for a power-assisted bicycle, including:

a motor housing;
a torque assembly, penetrating through the motor housing and having two ends extending out of the motor housing to receive an external torque (e.g., a torque generated by pedaling during riding);
a motor part, including a second stator and a second rotor, where the second stator includes a core attached into the motor housing and a winding wound around the core, the winding generates a rotational magnetic field when energized, the second rotor is used for providing a permanent magnetic field matched with an electromagnetic field generated by the stator winding, the second rotor is located on an inner side of the second stator and is coaxial with the second stator, and a third air gap is formed between the second rotor and the second stator;
the magnetic transmission speed-reduction device according to the present invention, where the first rotor is driven by the second rotor to rotate synchronously; and
a bidirectional clutch, arranged between the torque assembly and the modulation ring, where a torque is transmitted to the bidirectional clutch by either the torque assembly or the modulation ring, the bidirectional clutch is provided with a cylindrical output shaft used for outputting the torque and extending out of the motor housing, and the cylindrical output shaft is disposed around a radial outer side of an end of the torque assembly.

According to the mid-drive motor for a power-assisted bicycle, the permanent magnetic field of the second rotor and the rotational magnetic field generated by the second stator are coupled and generate an effective torque, the first rotor is driven by the second rotor to rotate synchronously to transmit power of the motor part to the speed-reduction device, and then the power is output by the modulation ring. The motor part and the magnetic transmission speed-reduction device achieve transmission by means of magnetic force, such that the field intensity of the space where the modulation ring is located is greatly increased, and the maximum output torque (i.e., the torque density) of the speed-reduction device is greatly increased under the condition that the size of the installation space is fixed, thereby improving the operating efficiency of the motor and reducing the overall noise of the motor.

Preferably, the mid-drive motor includes a sensor and a controller, and the controller instructs the motor part to work on the basis of a torque signal provided by the sensor. In this way, when the mid-drive motor is mounted on a bicycle, the motor part is instructed by a pedaling action to work to propel the bicycle forward.

Preferably, a stationary inner housing is disposed outside the torque assembly, and the sensor is arranged in the inner housing and used for detecting the torque signal and receiving a pedaling drive torque. Specifically, the pedaling drive torque may be a pressure signal or a rotational speed of the torque assembly.

Preferably, the bidirectional clutch includes an inner sleeve, an outer sleeve, a plurality of first clutch members and a plurality of second clutch members, the inner sleeve is disposed on the torque assembly and rotates together with the torque assembly, the outer sleeve is disposed on the modulation ring and rotates together with the modulation ring, the cylindrical output shaft is disposed around a radial outer side of the inner sleeve, the outer sleeve is disposed around a radial outer side of the cylindrical output shaft, the plurality of first clutch members are distributed between the cylindrical output shaft and the inner sleeve, and the plurality of second clutch members are distributed between the cylindrical output shaft and the outer sleeve; the first clutch members and the second clutch members are arranged oppositely. In this way, only one of torque transmission between a first outer circumference surface and a first inner circumferential surface via the first clutch members and torque transmission between a second outer circumference surface and a second inner circumferential surface via the second clutch members is allowed, and when one of the first clutch members and the second clutch members transmits torque, the other one does not transmit torque, enabling the mid-drive motor to adapt to multiple movement modes of a bicycle: first, when the bicycle is started normally from the static state, the bicycle is propelled merely by pedaling without being hindered by the mid-drive motor, and at this moment, no power is supplied to the mid-drive motor, and the mid-drive motor does not work; second, power is supplied to the mid-drive motor, only the mid-drive motor is allowed to output power to propel the bicycle without being hindered by the torque assembly, and at this moment, pedaling may be stopped; third, when the sensor detects a pedaling action, an electrical signal is provided to the controller, the controller controls the winding current to obtain different torques to drive the second rotor, power is supplied by both the motor and pedaling, and at this moment, the torque provided by the motor depends on the pedaling force and pedaling frequency.

To facilitate assembly with other parts, the torque assembly includes a motor shaft and a torque sleeve disposed around the motor shaft and rotating together with the motor shaft. In this way, machining of the torque assembly may be simplified, and the motor shaft and the torque sleeve are made from different materials according to structural requirements. It is readily conceivable that the torque assembly may be embodied as a single component as long as this is permitted by the machining process.

Preferably, the second rotor includes a second rotor core as well as main magnets and auxiliary magnets which are alternately arranged on a circumference of the second rotor core, the main magnets are magnetized tangentially, the auxiliary magnets are magnetized radially, and the second rotor core is provided with spacing magnetic bridges located between the main magnets and the auxiliary magnets and used for isolating the main magnets from the auxiliary magnets. The spacing magnetic bridges may concentrate the magnetic flux into the air gap to effectively increase the output torque, and compared with a conventional Halbach array, less magnets are used, thereby facilitating manufacturing of the rotor.

Preferably, the second rotor core is provided with a rotor inner magnetic bridge located on inner circumferences of the main magnets and the auxiliary magnets.

Preferably, the main magnets and the auxiliary magnets are inlaid in the second rotor core. In this way, the convenience of assembly is improved, and the structural strength of the second rotor is guaranteed.

Preferably, two shoe portions extend out from positions, corresponding to two vertexes close to the third air gap of each main magnet, of the second rotor core and form a semi-open main magnet mounting groove. On the one hand, installation of the main magnets is facilitated; on the other hand, magnetic circuit closure of the main magnets close to the third air gap is reduced, and flux leakage is reduced. In addition, when magnetic field lines extend from the auxiliary magnets to the third air gap, they are more uniformly spread in the third air gap from the rotor shoe portions and effectively reduce torque ripples together with the stator slots.

In one embodiment, axial projection contours of the main magnets are rectangular, axial projection contours of the auxiliary magnets are fan-shaped, the auxiliary magnets are located at inner positions in a radial direction, and a width $w1$ of the main magnets, a radial length $h1$ of the main magnets, a width $w5$ of inner edges of the auxiliary magnets, a radial length $h2$ of the auxiliary magnets and a width $w2$ of the magnetic bridges between the main magnets and the auxiliary magnets satisfy: $1.2<w1/w5<2.2$, $1.5<h1/h2<2.4$, $0.08<w2/w1<0.15$. A main permanent magnetic field at the third air gap is provided by the main magnets, while the auxiliary magnets play a role in increasing the field intensity at the air gap, and by reasonable positional arrangement and magnetization direction setting, the magnetic field lines at the ends, away from the air gap, of the main magnets are deflected to reduce flux leakage of the magnets. In this way, the magnetic density at the third air gap is effectively increased, and flux leakage is reduced, thereby increasing the output torque of the motor and effectively suppressing torque ripples.

In one embodiment, axial projection contours of the main magnets are rectangular, axial projection contours of the auxiliary magnets are rectangular, and the auxiliary magnets are located at inner positions in the radial direction. In this way, self-closing magnetic field lines at inner positions of the main magnets are pulled back onto a main magnetic circuit to reduce flux leakage, such that the magnetic intensity at the third air gap is higher, and the output torque is greater.

In one embodiment, axial projection contours of the main magnets are rectangular, axial projection contours of the auxiliary magnets are fan-shaped, and a radial length of the auxiliary magnets is equal to that of the main magnets. The auxiliary magnets are close to the core on the outer side in the radial direction, and the two shoe portions extend out from the two vertexes, close to the third air gap, of each main magnet form the semi-open main magnet mounting groove.

Preferably, a material grade of the main magnets is higher than that of the auxiliary magnets. In this way, the utilization of the permanent magnet of the rotor is maximized, and the cost waste is reduced. Due to the limitation imposed by the upper magnetic saturation limit of the magnetic material adopted by the motor, the main permanent magnetic field at the air gap is provided by the main magnets, while the auxiliary magnets play a role in increasing the field intensity at the air gap. Meanwhile, by reasonable positional arrangement and magnetization direction setting, the magnetic field lines at the ends, away from the air gap, of the main magnets are deflected to reduce flux leakage of the magnets. The main magnetic flux is provided by the main magnets.

Preferably, stator teeth, which are distributed uniformly and have a same width, are formed on the second stator core, and a winding slot is formed between every two adjacent stator teeth and provided with a stator slot facing the third air gap; the number of pole pairs of a magnetic field generated by the winding is $P1$, the number of the stator teeth is $P2$, the number of pole pairs of the second rotor is $P3$, and $P1+P3=P2$. Further, stator shoe portions, extending towards the stator slots, are arranged at positions, close to the third air gap, of the stator teeth. The stator teeth with the same width are not only used as stator magnetic circuits, but also used for modulating the magnetic field of the second rotor, thereby facilitating winding and controlling torque ripples together with the openings of the main magnets.

Preferably, the first rotor and the second rotor are both arranged on a cylindrical rotor shaft, and the cylindrical rotor shaft is disposed around a radial outer side of the torque assembly. In this way, the structure of the first rotor and the structure of the second rotor are simplified, and the concentricity of the first rotor and the second rotor is improved.

In one embodiment, the motor part and the magnetic transmission speed-reduction device are coaxially connected in series in an axial direction. In this way, the radial size of the entire mid-drive motor is reduced.

In one embodiment, the motor part and the magnetic transmission speed-reduction device are partially overlapped in the axial direction, and the motor part is disposed in the speed-reduction device. In this way, the axial size of the entire mid-drive motor is reduced.

In one embodiment, the motor part and the magnetic transmission speed-reduction device are partially overlapped in the axial direction, and the entire motor is disposed in the speed-reduction device. In this way, the axial size of the entire mid-drive motor is reduced.

The present invention achieves speed reduction by magnetic transmission. When the mid-drive motor works, the second rotor rotates by means of a magnetic flux generated by the second stator, the first rotor is driven by the second rotor to rotate synchronously to transmit power of the motor part to the speed-reduction device, and the power is slowed down by the speed-reduction device and then output. The motor part and the speed-reduction device achieve transmission by means of magnetic force, such that the field intensity of the space where the modulation ring is greatly increased, and the maximum output torque of the speed-reduction device is greatly increased under the condition that the size of the installation space is fixed, thereby improving the operating efficiency of the motor and reducing the overall noise of the motor.

The mid-drive motor provided by the present invention achieves speed reduction by magnetic transmission, such that the size of the motor is reduced, the rotation efficiency is improved, and under the precondition of guaranteeing the speed reduction ratio, the operating noise is reduced, and the service life is prolonged.

Brief Description of the Drawings

FIG. 1 is an orthographic view of a mid-drive motor for a power-assisted bicycle, from one perspective, according to Embodiment 1 of the present invention.
FIG. 2 is a sectional view along A-A in FIG. 1.
FIG. 3 is a sectional view along B-B in FIG. 1.
FIG. 4 is a sectional view along C-C in FIG. 1.
FIG. 5 is an exploded view of the mid-drive motor in FIG. 1.
FIG. 6 is a partial enlarged view of the cross-section of a speed-reduction device of the mid-drive motor in FIGS. 1-4.
FIG. 7 is a schematic diagram of a first rotor magnetic pole assembly in FIG. 6.
FIG. 8 is a schematic diagram of a modulation ring in FIG. 6.
FIG. 9 is a schematic diagram of a first stator magnetic pole assembly in FIG. 6.
FIG. 10 is a schematic diagram of a shielding ring in FIG. 6.
FIG. 11 is an exploded view of a first housing and a first stator in FIG. 5.
FIG. 12 is a partial view of the cross-section of a first structure of the first stator magnetic pole assembly according to the present invention.
FIG. 13 is a schematic diagram of magnetization directions of first stator permanent magnets constituting the first stator magnetic pole assembly in FIG. 12.
FIG. 14 is a partial view of the cross-section of a second structure of the first stator magnetic pole assembly.
FIG. 15 is a schematic diagram of magnetization directions of first stator permanent magnets constituting the first stator magnetic pole assembly in FIG. 14.
FIG. 16 is a partial view of the cross-section of a third structure of the first stator magnetic pole assembly.
FIG. 17 is a schematic diagram of magnetization directions of first stator permanent magnets constituting the first stator magnetic pole assembly in FIG. 16.
FIG. 18 is an exploded view of a first rotor and a second rotor which are arranged on a same cylindrical rotor shaft in FIG. 5.
FIG. 19 is an orthographic view of the first rotor and the second rotor which are arranged on the same cylindrical rotor shaft in FIG. 5, from one perspective.
FIG. 20 is a sectional view along D-D in FIG. 19.
FIG. 21 is an enlarged sectional view along E-E in FIG. 20.
FIG. 22 is a partial view of another structure of the second rotor and illustrates magnetization directions of main magnets and auxiliary magnets.
FIG. 23 is a partial view of a third structure of the second rotor.

FIG. 24 is an exploded view of the second rotor in FIG. 18.

FIG. 25 is a sectional view along F-F in FIG. 20.

FIG. 26 is a schematic diagram of magnetization directions of first rotor permanent magnets.

FIG. 27 is a partial view of a second stator core in FIG. 2.

FIG. 28 is a schematic diagram of another structure of the second stator core according to the present invention.

FIG. 29 is an axial orthographic view of the modulation ring in FIG. 5.

FIG. 30 is a sectional view along G-G in FIG. 29.

FIG. 31 is a sectional view along H-H in FIG. 30.

FIG. 32 is a partial view of another sectional structure of the modulation ring.

FIG. 33 is an exploded view of the modulation ring in FIG. 5.

FIG. 34 is a schematic diagram of a bidirectional clutch according to the present invention.

FIG. 35 is an orthographic view of the structure in FIG. 34, from one perspective.

FIG. 36 is a partial enlarged view along J-J in FIG. 35.

FIG. 37 is a sectional view along K-K in FIG. 36.

FIG. 38 is a sectional view of a mid-drive motor for a power-assisted bicycle according to Embodiment 2 of the present invention.

FIG. 39 is a sectional view of a mid-drive motor for a power-assisted bicycle according to Embodiment 3 of the present invention.

FIG. 40 is a schematic diagram of the position of the mid-drive motor for a power-assisted bicycle on a bicycle according to the present invention.

FIG. 41 is an exploded view of an assembly structure of the mid-drive motor for a power-assisted motor and a frame of a bicycle according to the present invention.

Reference signs:

100, motor housing; 101, first housing; 102, second housing; 103, first end cover; 104, second end cover; 105, shielding ring; 106, inner housing; 107, first bearing; 108, second bearing; 109, third bearing; 110, fourth bearing; 111, fifth bearing; H4, thickness of shielding ring; d5, inner diameter of shielding ring;

200, torque assembly; 201, motor shaft; 202, torque sleeve;

300, motor part;

310, second stator; 311, second stator core; 312, winding; 313, stator tooth; 314, winding slot; 315, stator slot; 316, stator shoe portion;

320, second rotor; 321, second rotor magnetic pole assembly; 322, main magnet; 323, auxiliary magnet; 324, spacing magnetic bridge; 325, rotor inner magnetic bridge; 326, second rotor core; 327, opening; 328, rotor shoe portion; W1, width of main magnet; h1, radial length of main magnet; w5, width of inner edge of auxiliary magnet; h2, radial length of auxiliary magnet; w2, width of magnetic bridge between main magnet and auxiliary magnet;

330, third air gap;

400, magnetic transmission speed-reduction device;

410, first stator; 411, first stator magnetic pole assembly; 412, radial permanent magnet; 413, tangent permanent magnet; 414, large-sized permanent magnet; 415, small-sized permanent magnet; 416, angular centripetal permanent magnet; 417, edge centripetal permanent magnet;

H3, radial thickness of first stator permanent magnet; w3, circumferential mean width of first stator permanent magnet; D2, included angle between two radial edges of small-sized permanent magnet; H5, radial thickness of small-sized permanent magnet; D3, included angle between two radial edges of large-sized permanent magnet; H6, radial thickness of large-sized permanent magnet; d5, outer diameter of first stator; d4, inner diameter of first stator;

420, first rotor; 421, first rotor magnetic pole assembly; 422, first rotor permanent magnet;

H1, radial thickness of first rotor permanent magnet; W1, circumference mean width of first rotor permanent magnet; d1, outer diameter of first rotor;

430, modulation ring; 431, cage; 432, end plate; 433, connecting rod; 434, arc groove; 435, modulation tooth; D1, included angle between two radial edges of modulation tooth; H2, radial thickness of modulation tooth; W2, circumferential mean width of modulation tooth;

440, first air gap;

450, second air gap;

500, bidirectional clutch; 501, cylindrical output shaft; 502, inner sleeve; 503, outer sleeve; 504, first clutch member; 505, second clutch member;

601, sensor; 602, controller;

700, cylindrical rotor shaft;

800, power-assisted bicycle; 801, frame; 802, crank; 803, pedal; 804, drive sprocket; 805, drive sprocket locking nut; 806, chain; 807, driving wheel; 808, driven sprocket;

900, mid-drive motor for power-assisted bicycle.

Detailed Description of the Invention

To better clarify the purposes, technical solutions and advantages of the present invention, the technical solutions in the embodiments of the present invention are clearly and completely described below in conjunction with accompanying drawings of the embodiments of the present invention. Obviously, the embodiments described below are merely illustrative ones rather than all possible ones of the present invention. All other embodiments obtained by those ordinarily skilled in the art on the basis of the following ones without creative labor should also fall within the protection scope of the present invention.

Terms "comprise" and "provided with" and any variants thereof in the description and claims of the present invention intend to indicate non-exclusive inclusion. For example, a method or product including a series of technical features is not definitely limited to the technical features that are clearly listed, but also may include other technical features, that are not clearly listed, included in the method or product.

In the description of the present invention, it should be understood that sequential terms such as "first" and "second" are merely for clearly describing technical features defined to ensure that the technical features defined may be clearly differentiate from other technical features, do not indicate that the technical features must be named in this way in actual implementation, and thus should not be construed limitations of the present invention.

The present invention is described in detail below in conjunction with specific embodiments and accompanying drawings.

Power-assisted bicycles are well-known, and riders tread on pedals to transmit a torque to wheels to drive the bicycles to move forwards. By configuring a mid-drive motor for a bicycle, external power is provided without compromising pedal-assisted riding, making it easier for riders to ride the bicycle. A hub motor is positioned coaxially with wheels of a vehicle and directly transmits power to the wheels, and when the vehicle moves forward, the hub motor will apply a resistance to the vehicle. In comparison, a mid-drive motor is installed in the middle of a frame of a bicycle and transmits power to wheels by means of a transmission mechanism, such that that the bicycle is essentially free of resistance from the mid-drive motor when moving forward, and the bicycle can move for a longer distance.

The embodiments of the present invention provides a mid-drive motor for a power-assisted bicycle.

**Embodiment 1**

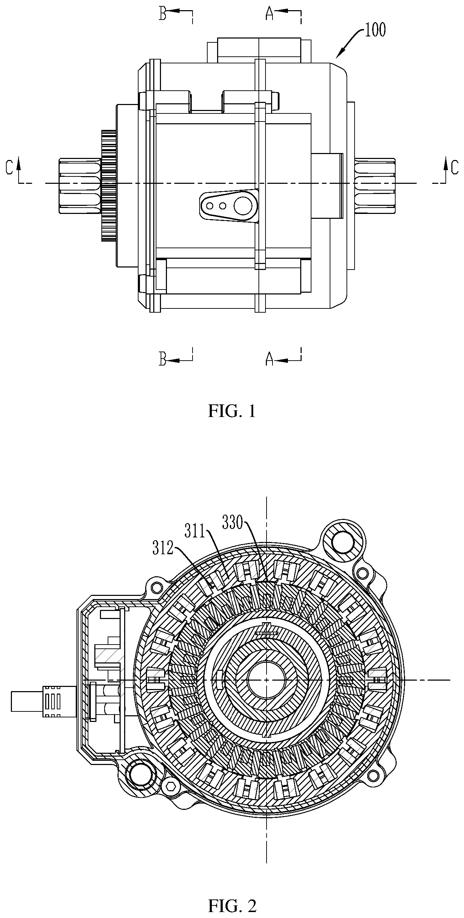

As shown in FIGS. 1-5 which illustrate a mid-drive motor for a power-assisted bicycle according to this embodiment, the mid-drive motor includes: a motor housing 100, a torque assembly 200, a motor part 300, a magnetic transmission speed-reduction device 400, a bidirectional clutch 500, a sensor 601 and a controller 602.

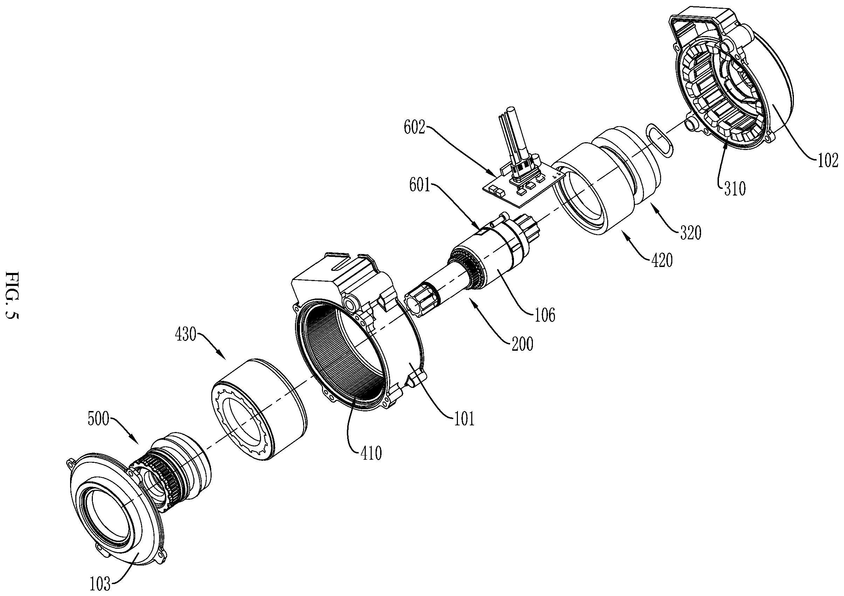

The motor housing 100 functions as an assembly basis of the torque assembly, the motor part, the magnetic transmission speed-reduction device and the bidirectional clutch, and is used for assembling the mid-drive motor on a bicycle. In this embodiment, for the convenience of assembly, as shown in FIG. 5, the motor housing 100 includes a first housing 101, a second housing 102 and a first end cover 103, which are assembled together by means of fasteners.

The torque assembly 200 penetrates through the motor housing 100 and has two ends extending out of the motor housing to receive an external torque, such as a torque generated by pedaling during riding. In this embodiment, the torque assembly 200 includes a motor shaft 201 and a torque sleeve 202. The torque sleeve 202 is disposed around the motor shaft and assembled on the motor shaft by means of a spline, such that the torque sleeve rotates together with the motor shaft. A stationary inner housing 106 is arranged outside the torque assembly. One end of the inner housing 106 is fixed to the second end cover 104, such that the torque assembly is rotatable with respect to the inner housing.

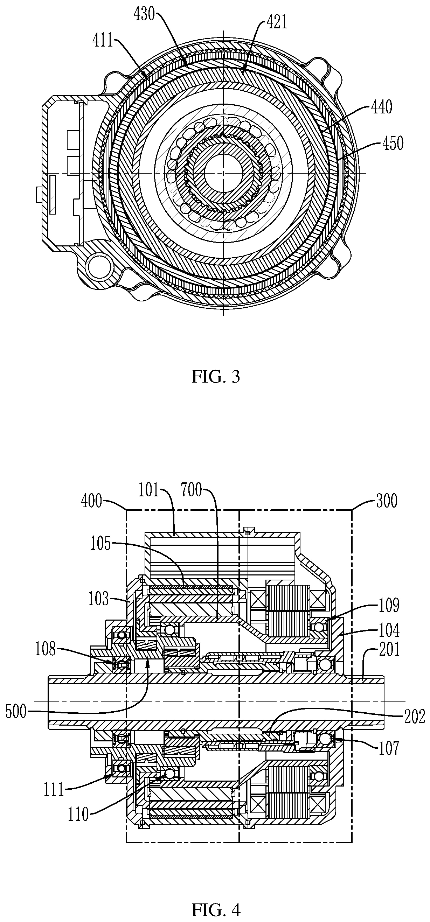

The motor part 300 is encircled by a double-dot dash line in FIG. 4. The motor part 300 includes a second stator 310 and a second rotor 320. The second rotor 320 is located on an inner side of the second stator 310 and is coaxial with the second stator. A third air gap 330 is maintained between the second rotor 320 and the second stator 310. Particularly, an axial height of second rotor permanent magnets is equal to an axial thickness of a second stator core, thereby guaranteeing a small axial size of the product.

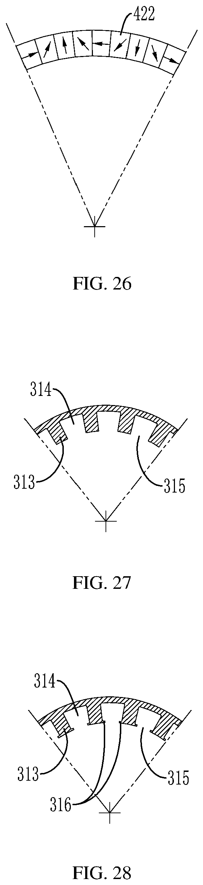

The second stator 310 includes a second stator core 211 attached into the second housing 102 of the motor housing and a winding 312 wound around the second stator core. As shown in FIGS. 27 and 28, stator teeth 313, which are distributed uniformly and have the same width, are formed on the second stator core 311, winding slots 314 are formed between the adjacent stator teeth, and the winding slots 314 are provided with stator slots 315 facing the third air gap. The number of pole pairs of a magnetic field generated by the winding is P1, the number of the stator teeth is P2, the number of pole pairs of the second rotor is P3, and P1+P3=P2. Stator shoe portions 316, extending towards the stator slots, are arranged on the stator teeth 313 close to the third air gap.

An alternating signal may be applied to the winding 312 to generate a varying magnetic field for driving the second rotor to rotate.

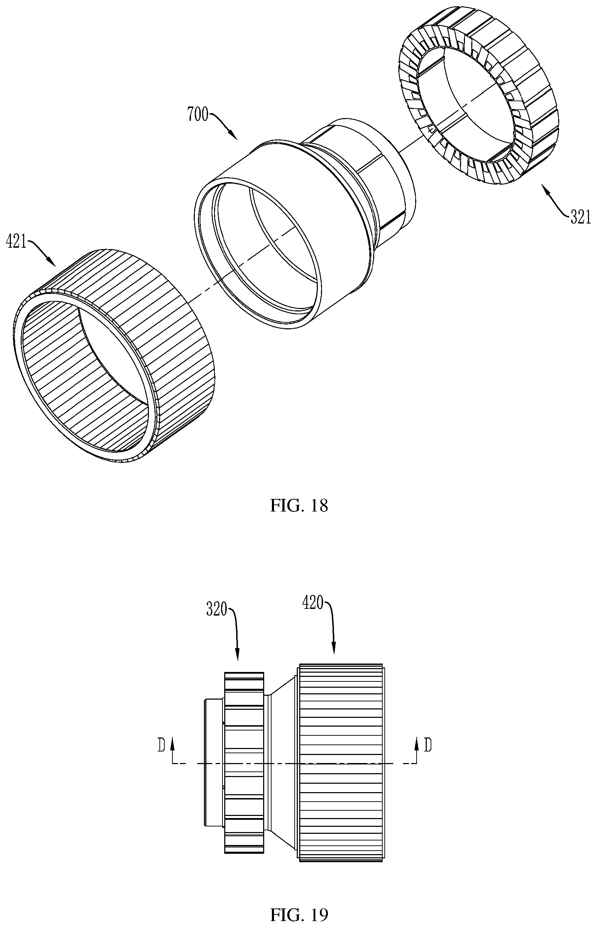

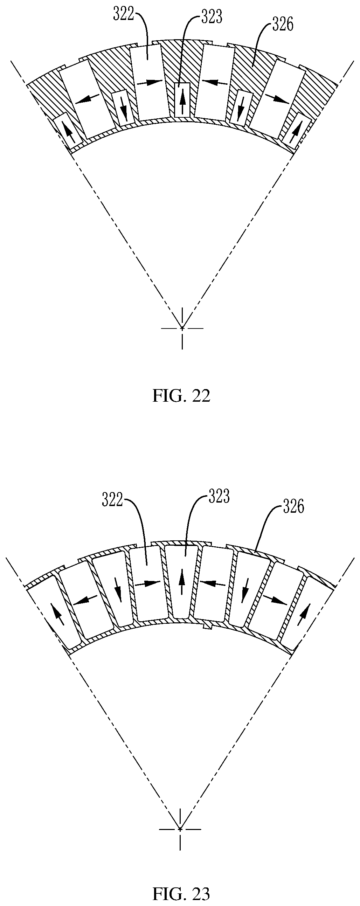

As shown in FIGS. 18-24, the second rotor 320 includes a ring-shaped second rotor magnetic pole assembly 321, and the second rotor magnetic pole assembly 321 is used for providing a second rotor magnetic field for rotation with the second rotor. The second rotor magnetic pole assembly 321 includes main magnets 322 and auxiliary magnets 323 which are alternately arranged on the circumference of the second rotor core. The main magnets are magnetized tangentially, the auxiliary magnets are magnetized radially, and the magnetization directions are indicated by arrows in FIGS. 22 and 23. The second rotor core 326 is provided with spacing magnetic bridges 324 located between the main magnets 322 and the auxiliary magnets 323 and used for isolating the main magnets from the auxiliary magnets. The second rotor core 326 is provided with a rotor inner magnetic bridge 325, which is located on inner circumferences of the main magnets and the auxiliary magnets. The spacing magnetic bridges 324 and the rotor inner magnetic bridge 325 are formed on the second rotor core 326, and the main magnets 322 and the auxiliary magnets 323 are inlaid in the second rotor core 326. Openings 327 are formed in positions, corresponding to the main magnets 322 and close to the third air gap 330, of the second rotor core 326, and two opposite rotor shoe portions 328 are formed on two edges of each of the openings. In addition, a material grade of the main magnets is higher than that of the auxiliary magnets.

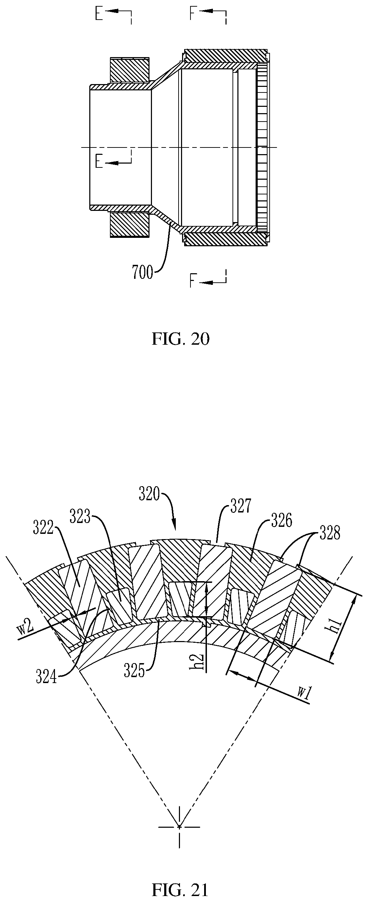

As shown in FIG. 21, axial projection contours of the main magnets 322 are rectangular, and axial projection contours of the auxiliary magnets 323 is fan-shaped. The auxiliary magnets 323 are located at inner positions in a radial direction and are adjacent to the rotor inner magnetic bridge 325 together with the main magnets 322, and the rotor inner magnetic bridge 325 is embodied as a circular ring with a uniform thickness. The width w1 of the main magnets, the radial length h1 of the main magnets, the width w5 of inner edges of the auxiliary magnets, the radial length h2 of the auxiliary magnets and the width w2 of the magnetic bridges between the main magnets and the auxiliary magnets satisfy: $1.2 < w1/w5 < 2.2$, $1.5 < h1/h2 < 2.4$, $0.08 < w2/w1 < 0.15$. Alternatively, as shown in FIG. 22, the axial projection contours of the main magnets 322 are rectangular, the axial projection contours of the auxiliary magnets 323 are rectangular, the auxiliary magnets are located at inner positions in the radial direction and are adjacent to the rotor inner magnetic bridge together with the main magnets, and the rotor inner magnetic bridge is embodied as a circular ring with a uniform thickness. Or, as shown in FIG. 23, the axial projection contours of the main magnets 322 are rectangular, the axial projection contours of the auxiliary magnets 323 are fan-shaped, and the radial length of the auxiliary magnets is equal to that of the main magnets.

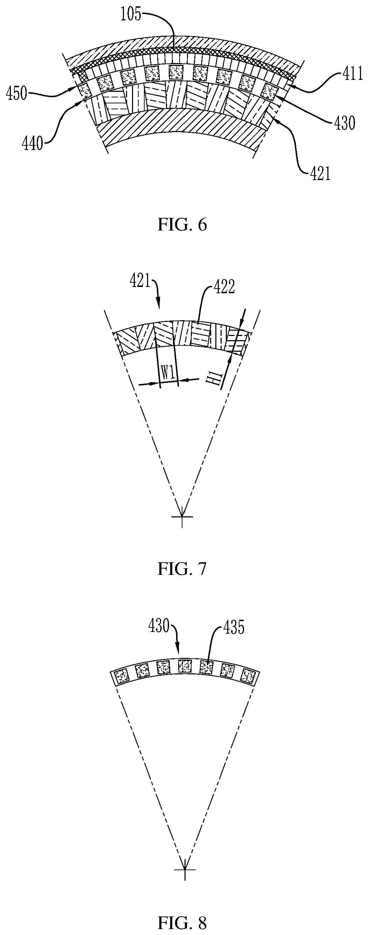

As shown in FIG. 6, the magnetic transmission speed-reduction device 400 includes a first stator 410, a first rotor 420 and a modulation ring 430.

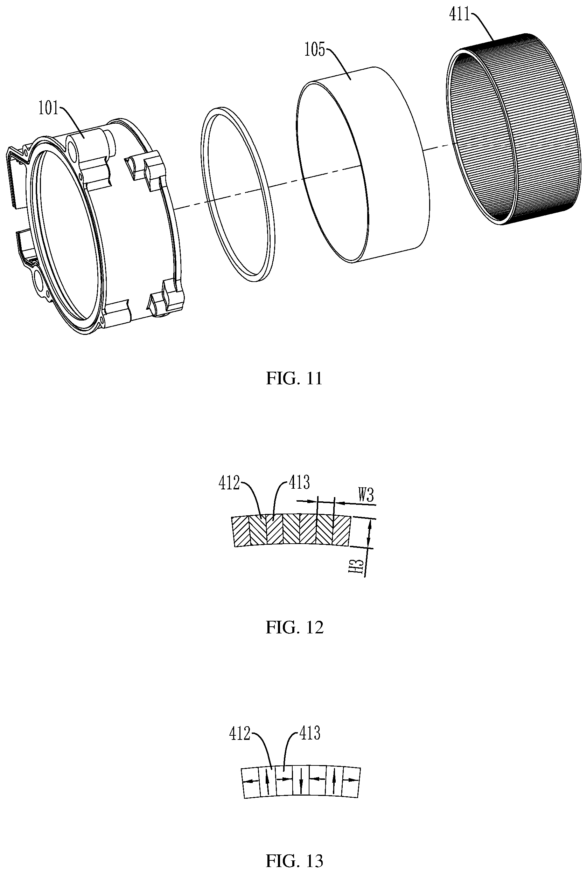

As shown in FIG. 11, the first stator 410 is fixed in the first housing 101 of the motor housing, and a steel ring is inlaid in an inner wall of the first housing 101 to serve as a shielding ring 105 for shielding a magnetic field of the first rotor. The first stator 410 includes a ring-shaped first stator magnetic pole assembly 411, and the first stator magnetic pole assembly is used for providing a constant first stator magnetic field. As shown in FIGS. 12-17, the magnetic field of the first stator magnetic pole assembly 411 is distributed in the form of a Halbach Array. The first stator magnetic pole assembly 411 is formed by first stator permanent magnets, which are spliced together after being magnetized one-by-one, with each pole being divided into two first stator permanent magnets which are magnetized radially and tangentially respectively, and a magnetic flux being concentrated inwardly on the whole. In addition, the shielding ring is divided into N segments in an axial direction, the axial length of each segment of the shielding ring is L1, the axial length of the first stator magnetic pole assembly is L, all the segments of the shielding ring are uniformly distributed in the axial direction, an end of the shielding ring is aligned with the first stator magnetic pole assembly, and a distance between end surfaces, close to each other, every two segments of the shielding ring is $(L-N*L1)/(N-1)$, where $L1 > 0.65*(L/N)$, $N < 0$.

The first stator permanent magnets adopt any one of the following configurations:

(1) As shown in FIGS. 12-13, axial projection contours of the first stator permanent magnets are all fan-shaped and identical in size, the first stator permanent magnets are divided into radial permanent magnets 412 and tangent permanent magnets 413, the radial permanent magnets are magnetized radially, the tangent permanent magnets are magnetized tangentially, and magnetization directions are indicated by the arrows. The radial permanent magnets and the tangent permanent magnets are spliced alternately to form the first stator magnetic pole assembly, the magnetization directions of every two adjacent radial permanent magnets are opposite, and the magnetization directions of every two adjacent tangent permanent magnets are opposite. The radial thickness of the first stator permanent magnets is H3, the circumferential mean width of the first stator permanent magnets is W3, and $W3/H3 = 0.52-0.6$. The circumferential mean width of the first stator permanent magnets is a chord length determined on the basis of a circle where the geometric center of the axial projection contours of the first stator permanent magnets is located.

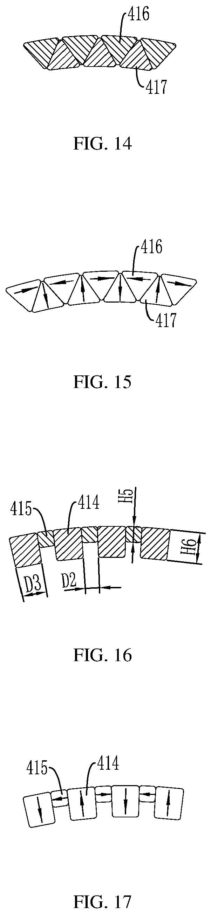

(2) As shown in FIGS. 14-15, axial projection contours of the first stator permanent magnets are all fan-shaped, the first stator permanent magnets are divided into large-sized permanent magnets 414 and small-sized permanent magnets 415, the large-sized permanent magnets are magnetized radially, the small-sized permanent magnets are magnetized tangentially, and magnetization directions are indicated by the arrows. The large-sized permanent magnets and the small-sized permanent magnets are spliced alternately to form the first stator magnetic pole assembly, the magnetization directions of every two adjacent large-sized permanent magnets are opposite, and the magnetization directions of every two adjacent small-sized permanent magnets are opposite. An included angle between two radial edges of each of the small-sized permanent magnets is D2, and the radial thickness of the small-sized permanent magnets is H5; an included angle between two radial edges of each of the large-sized permanent magnets is D3, and the radial thickness of the large-sized permanent magnets is H6; and 1.5<D3/D2<2.2, 0.4<H6/H5<0.6.

(3) As shown in FIGS. 16-17, axial projection contours of the first stator permanent magnets are all triangular, the first stator permanent magnets are divided into angular centripetal permanent magnets 416 and edge centripetal permanent magnets 417, the edge centripetal permanent magnets are magnetized radially, the angular centripetal permanent magnets are magnetized tangentially, and magnetization directions are indicated by the arrows. The angular centripetal permanent magnets and the edge centripetal permanent magnets are spliced alternately to form the first stator magnetic pole assembly, the magnetization directions of every two adjacent angular centripetal permanent magnets are opposite, the magnetization directions of every two adjacent edge centripetal permanent magnets are opposite, edges of the angular centripetal permanent magnets form an outer edge of the first stator magnetic pole assembly, edges of the edge centripetal permanent magnets form an inner edge of the first stator magnetic pole assembly, and the adjacent edges of the angular centripetal permanent magnets and the edge centripetal permanent magnets have the same length and are completely aligned. The outer diameter of the first stator is d5, the inner diameter of the first stator is d4, the number of pole pairs of the first stator is p3, and $0.8 \times d4 \times \sin(360deg/4p3) < d5-d4 < 0.9 \times d4 \times \sin(360deg/4p3)$.

As shown in FIGS. 5, 18-20 and 25-26, the first rotor 420 includes a first rotor magnetic pole assembly 421, the first rotor magnetic pole assembly is used for providing a first rotor magnetic field for rotation with the first rotor, and the first rotor 420 is located on an inner side of the first stator 410 and coaxial with the first stator. The magnetic field of the first rotor magnetic pole assembly 421 is distributed in the form of a Halbach Array. The first rotor magnetic pole assembly is formed by first rotor permanent magnets 422, which are spliced together after being magnetized one-by-one, with each pole being divided into four first rotor permanent magnets 422, and a magnetic flux being concentrated outwardly on the whole. The number of pole pairs of the first rotor is p1, the first rotor includes $8 \times p1$ first rotor permanent magnets, an angle between magnetization directions of every two adjacent first rotor permanent magnets is $(45-360/(8 \times p1))°$, the magnetization directions of the adjacent first rotor permanent magnets are indicated by the arrows in FIG. 26, and angles of the magnetization directions change one-by-one in one direction (e.g., clockwise or anticlockwise) in an axial projection plane, such that the magnetic directions of every two adjacent poles are opposite. For example, as shown in FIG. 26, in a case where a pole is formed by four adjacent first rotor permanent magnets, the magnetic directions of every two adjacent poles are opposite. As shown in FIG. 7, axial projection contours of the first rotor permanent magnets is fan-shaped, and the first rotor permanent magnets have the same size, where the radial thickness of the first rotor permanent magnets is H1, the circumferential mean width of the first rotor permanent magnets is W1, and H1/W1=0.8-1.5. Where, the circumferential mean width of the first rotor permanent magnets is a chord length determined on the basis of a circle where the geometric center of the axial projection contours of the first rotor permanent magnets is located.

In the structure shown below, the first rotor 420 and the second rotor 320 are both arranged on a cylindrical rotor shaft 700, and the first rotor drives the second rotor to rotate synchronously.

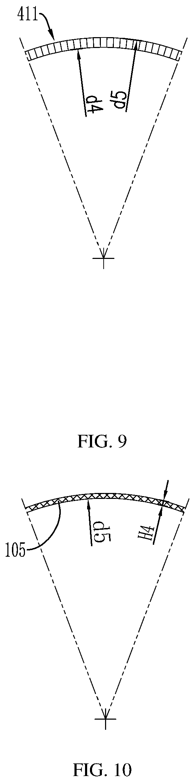

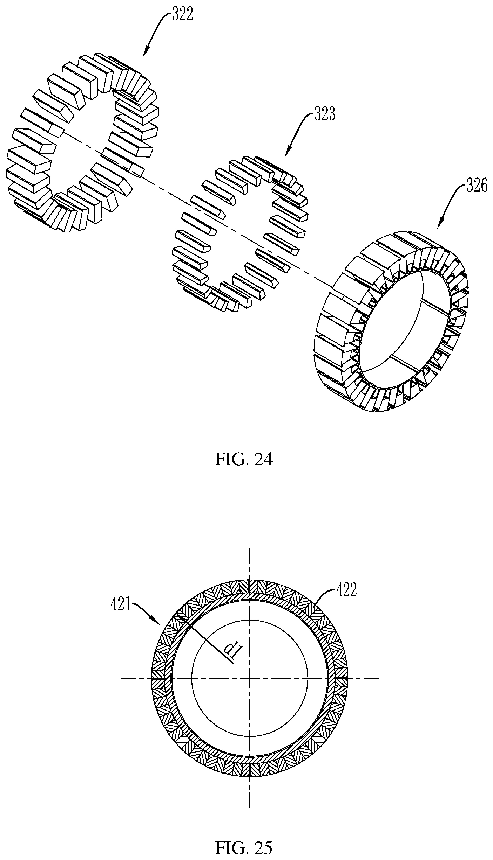

In addition, the thickness H4 of the shielding ring 105 (see FIG. 10), the outer diameter d1 of the first rotor (see FIG. 25), the inner diameter d5 of the shielding ring (see FIG. 10) and the number p1 of pole pairs of the first rotor satisfy the following formulae: $d5-d1 < d1 \times \sin(360deg/4p1)$, $H4 \geq 0.185 \times d1 \times (1+\sin(360deg/4p1)) - 0.5 \times d5$.

The modulation ring 430 is located between the first rotor 420 and the first stator 410 and coaxial with the first rotor 420 and the first stator 410, a first air gap 440 is formed between the modulation ring and the first stator, and a second air gap 450 is formed between the modulation ring and the first rotor.

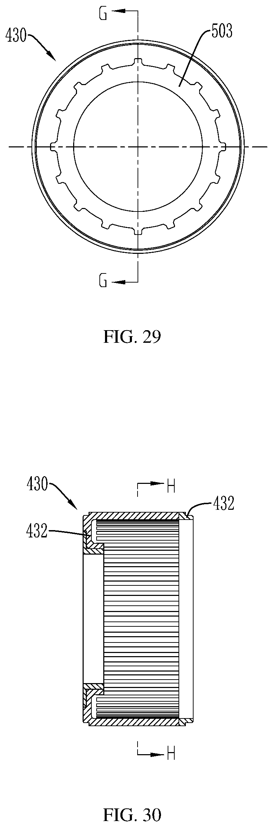

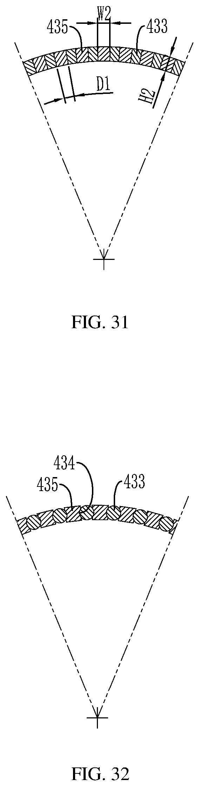

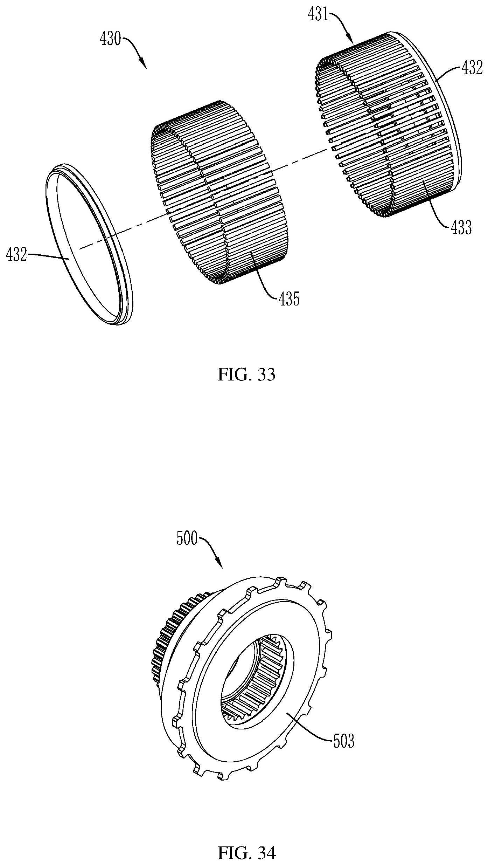

As shown in FIG. 5 and 29-33, the modulation ring 430 includes modulation teeth 435 and a cage 431. The modulation teeth 435 are made from a material with a high saturation magnetic flux density, such as 1J22 ferrum-cobalt-vanadium soft magnetic alloy or DT4 electromagnetic pure iron.

The cage 431 includes two end plates 432 and a plurality of connecting rods 433 connected between the two end plates. The connecting rods extend in the axial direction and are distributed in a circumferential direction, and the modulation teeth 435 are fixed in gaps between the adjacent connecting rods 433. The modulation teeth 435 may be inlaid in the gaps between the adjacent connecting rods 433 or may be fixed in the gaps between the adjacent connecting rods 433 by injection molding of the modulation ring. The cage is made from a composite material. The end plates of the cage and the modulation teeth are placed in a mold to be integrally injection-molded, thereby satisfying size requirements and strength requirements of the modulation ring, the cage and the end plates.

In addition, the modulation teeth are identical in size, the total number of the modulation teeth is p2, axial projection contours of the modulation teeth are fan-shaped, an included angle between two radial edges of each of the modulation teeth is D1, and D1/(360deg/p2) = 0.5-0.6. The radial thickness of the modulation teeth is H2, the circumferential mean width of the modulation teeth is W2, and H2/W2=0.55-1.3. The circumferential mean width of the modulation teeth is a chord length determined on the basis of a circle where the geometric center of the axial projection contours of the modulation teeth is located. In other embodiments, alternatively, the connecting rods 433 are cylindrical, arc grooves 434 are formed in middle positions of two circumferential sides of each of the modulation teeth 435, and the arc grooves 434 are attached to surfaces of the connecting rods, such that the connecting rods and the cylindrical connecting rods 433 are mutually supported.

Further, the number of pole pairs of the first rotor is p1, the total number of the modulation teeth is p2, the number of pole pairs of the first stator is p3, and p1=|p2-p3|.

The first stator and the first rotor are provided with different numbers of pole pairs, and the modulation ring performs magnetic field modulation on the magnetomotive force of the first rotor, such that the magnetic field of the first air gap and the magnetic field of the second air gap are coupled, and rotation from the first rotor is slowed down and output coaxially with the first rotor by the modulation ring to increase the torque.

As shown in FIGS. 4-5 and 34-37, the bidirectional clutch 500 is arranged between the torque assembly 200 and the modulation ring 430. Alternatively, a torque is transmitted to the bidirectional clutch 500 by the torque assembly or the modulation ring. The bidirectional clutch is provided with a cylindrical output shaft 501, which is used for outputting the torque and extends out of the motor housing. The bidirectional clutch 500 includes an inner sleeve 502, an outer sleeve 503, a plurality of first clutch members 504 and a plurality of second clutch member 505. The inner sleeve 502 is arranged on the torque assembly 200 by means of a spline and rotates together with the torque assembly. The outer sleeve 503 is die-cast on an end surface of the modulation ring to be fixedly arranged on the modulation ring and rotates together with the modulation ring. The cylindrical output shaft 501 is disposed around a radial outer side of the inner sleeve 502. The outer sleeve 503 is disposed around a radial outer side of the cylindrical output shaft 501. The plurality of first clutch members 504 are distributed between the cylindrical output shaft 501 and the inner sleeve 502. The plurality of second clutch members 505 are distributed between the cylindrical output shaft 501 and the outer sleeve 503. The first clutch members 504 and the second clutch members 505 are arranged oppositely. To achieve a uniform distribution of the first clutch members and the second clutch members in a circumferential direction to ensure that the bidirectional clutch acts flexibly, the adjacent first clutch members are spaced apart from each other by rollers and fill in a circumferential gap between the cylindrical output shaft and the inner sleeve together the rollers, and the adjacent second clutch members are spaced apart from each other by rollers in the circumferential direction and fill in a circumferential gap between the cylindrical output shaft and the outer sleeve together with the rollers. In the structure shown below, the first clutch members and the second clutch members have the same cross-section. The opposite arrangement of the first clutch members and the second clutch members means that the installation direction of the first clutch members is opposite to the installation direction of the second clutch members.

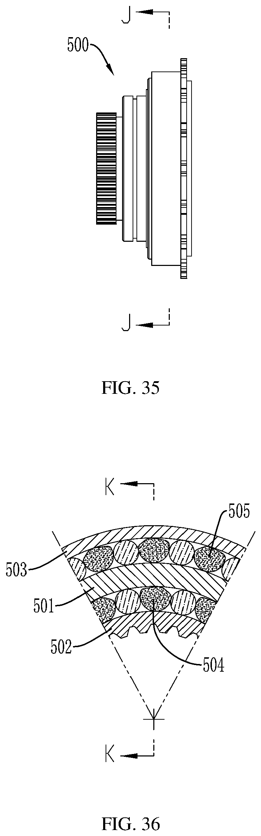

In FIG. 4, the first clutch members 504 and the second clutch members 505 are located at different positions in the axial direction and are staggered in the axial direction. In FIGS. 35-37, the first clutch members 504 and the second clutch members 505 are located at the same positions in the axial direction and are in correspondence in a radial direction. Any one of these structures may be selected as needed.

In the structure described above, a first bearing 107 is assembled between a pivot shaft 201 and a second end cover 104 of the second housing, a second bearing 108 is assembled between the pivot shaft 201 and the cylindrical output shaft 501 of the bidirectional clutch, a third bearing 109 is assembled between the cylindrical rotor shaft 700 and the second end cover 104 of the second housing, a fourth bearing 110 is assembled between the cylindrical rotor shaft 700 and the cylindrical output shaft 501 of the bidirectional clutch, and a fifth bearing 111 is assembled between the cylindrical rotor shaft 700 and the first end cover 103, such that the torque assembly 200, the first rotor 420 and the second rotor 320 are all rotatable with respect to the motor housing 100, and the cylindrical output shaft 501 of the bidirectional clutch is rotatable with respect to the torque assembly and the modulation ring.

As shown in FIG. 36, when the inner sleeve 502 is driven to rotate clockwise by pedaling, the first clutch members 504 tend to rotate anticlockwise under the action of friction and are squeezed between the cylindrical output shaft 501 and the inner sleeve 502 in a major-axis direction, and the clockwise rotation of the inner sleeve 502 is transmitted by the first clutch members to the cylindrical output shaft 501, such that the cylindrical output shaft 501 is driven to rotate clockwise. Further, when the cylindrical output shaft 501 rotates clockwise, the second clutch members 505 tend to rotate anticlockwise under the action of friction and correspond to the cylindrical output shaft 501 and the outer sleeve 503 in a minor-axial direction, the second clutch members 505 will not transmit the clockwise rotation of the cylindrical output shaft to the outer sleeve 503, and at this moment, the torque of the torque assembly will not be transmitted to the outer sleeve and the modulation ring. This case is suitable for propelling a bicycle by pedaling.

Referring to FIG. 36, power is supplied to the mid-drive motor to start the mid-drive motor, the second rotor rotates by means of a magnetic flux generated by the second stator, the first rotor is driven by the second rotor to rotate synchronously to transmit power of the motor part to the modulation ring of the speed-reduction device, and the outer sleeve is connected to the modulation ring; when the outer sleeve 503 rotates clockwise, the second clutch members 505 tend to rotate clockwise under the action of friction and are squeezed between the cylindrical output shaft 501 and the outer sleeve 503 in the major-axis direction, and the clockwise rotation of the outer sleeve 503 is transmitted by the second clutch members 505 to the cylindrical output shaft 501, enabling the cylindrical output shaft 501 to rotate clockwise. Further, when the cylindrical output shaft 501 rotates clockwise, the first clutch members 504 tend to rotate clockwise under the action of friction and correspond to the cylindrical output shaft 501 and the inner sleeve 502 in the minor-axis direction, the first clutch members 504 will not transmit the clockwise rotation of the cylindrical output shaft to the inner sleeve 502, and the torque of the modulation ring will not be transmitted to the torque assembly. This case is suitable for propelling a bicycle by means of the mid-drive motor.

In the process of riding a bicycle, when the bicycle coasts forward, power transmission between a drive sprocket and a driven sprocket of the mid-drive motor will be cut off due to a unidirectional clutch structure of a transmission mechanism between the mid-drive motor and a driving wheel, such as a ratchet-pawl mechanism arranged in the driving wheel and the driven sprocket, such that pedaling power or motor power does not need to be provided to the bicycle.

In the process of riding a bicycle, when the bicycle turns around or is propelled to move backward, the driving wheel of the bicycle establishes transmission with the cylindrical output shaft by means of a transmission mechanism, the cylindrical output shaft rotates clockwise as when the bicycle moves forward, the backward movement of the driving wheel of the bicycle propels the cylindrical output shaft 501 to rotate anticlockwise, the anticlockwise rotation of the cylindrical output shaft propels the inner sleeve 502 and the torque assembly 200 to rotate anticlockwise by means of the first clutch members 504 and propels the outer sleeve and the modulation ring to rotate anticlockwise by means of the second clutch members 505. In this case, power is not supplied to the mid-drive motor, and the mid-drive motor is in a non-operating state.

In the riding process, the bicycle may be propelled by pedaling and by the mid-motor alternately, so the mid-drive motor includes a sensor 601 and a controller 602, and the controller instructs the motor part to work on the basis of to a signal, indicating that the torque assembly receives a pedaling drive torque, provided by the sensor. In this way, when the mid-drive motor is mounted on the bicycle, the motor part is instructed by a pedaling action to work to propel the power-assisted bicycle. As shown in FIG. 5, the sensor 601 is arranged in the inner housing 106 and used for detecting the pedaling drive torque received by the torque assembly. The pedaling drive torque may be a pressure signal or rotation of the torque assembly. The controller 602 may be arranged on the mid-drive motor or a vehicle. When a rider intend to ride the bicycle, the rider treads on the pedals, the pedaling drive torque generated by pedaling is transmitted to the torque assembly by means of the cranks, and the sensor detects a rotational tendency of the torque assembly, a pressure signal generated by rotation, or a rotational signal and provides the signal to the controller.

In this embodiment, the permanent magnets of the magnetic pole assemblies constituting the first stator, the first rotor and the second rotor are distributed circumferentially in an axial projection plane.

In this embodiment, the motor part 300 and the magnetic transmission speed-reduction device 400 are coaxially connected in series in an axial direction, as shown in FIG. 4.

## Embodiment 2

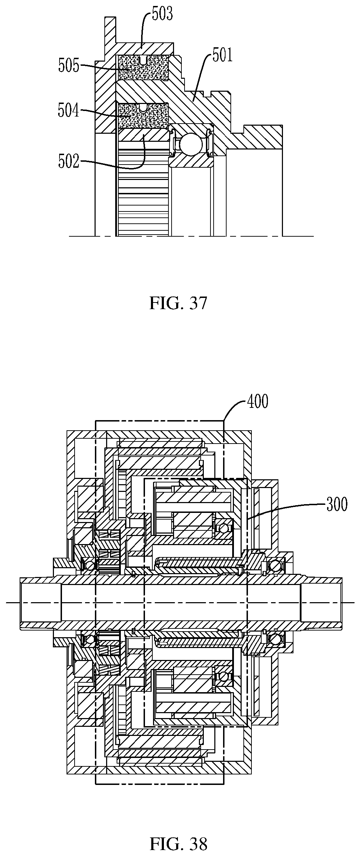

As shown in FIG. 38, Embodiment 2 is different from Embodiment 1 in that the motor part 300 and the speed-reduction device 400 are partially overlapped in the axial direction and the motor part is disposed in the speed-reduction device. The other structures in Embodiment 2 are the same as those in Embodiment 1 and will not be repeated here.

## Embodiment 3

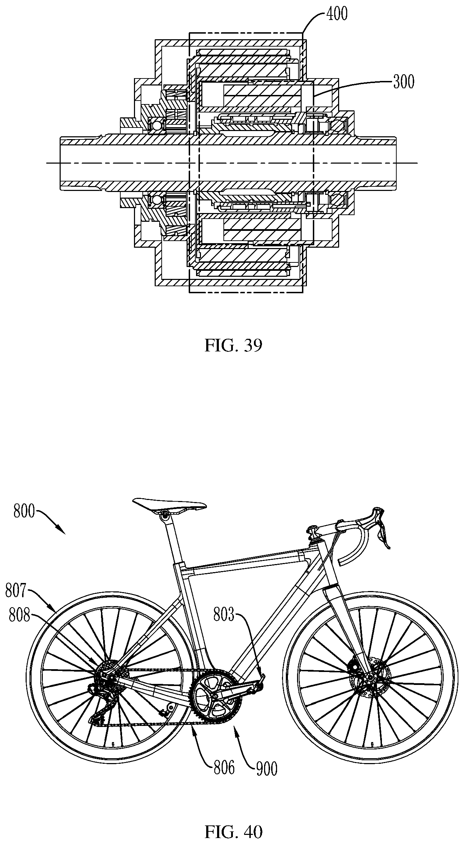

As shown in FIG. 39, Embodiment 3 is different from Embodiment 1 in that the motor part 300 and the speed-reduction device 400 are overlapped in the axial direction and the entire motor is disposed in the speed-reduction device. The other structures in Embodiment 2 are the same as those in Embodiment 1 and will not be repeated here.

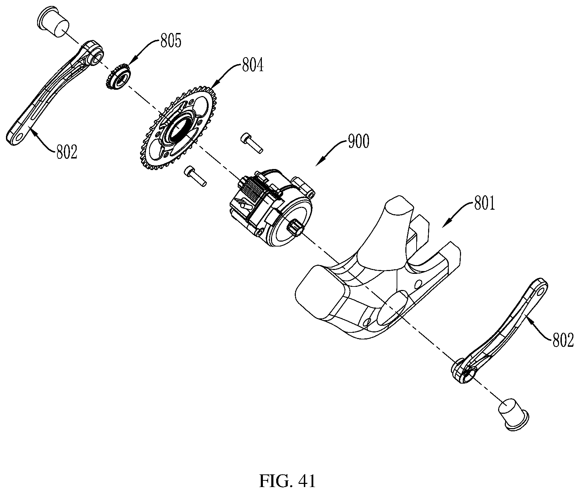

he mid-drive motor in the above embodiments is fastened on a frame by means of fasteners, as shown in FIG. 41. A crank is assembled at each of two ends of the pivot shaft, a pedal 803 is assembled on each crank, and the drive sprocket 804 is fastened on the cylindrical output shaft 501 of the bidirectional clutch by means of an adapter sleeve 805. As shown in FIG. 40, a chain 804 is fitted on the drive sprocket 804 and the driven sprocket 808 of the driving wheel 807, such that the bicycle may be ridden as described above.

The present invention adopts typical magnetic transmission, the modulation ring is disposed between the first rotor and the first stator, the first rotor, the modulation ring and the first stator are not in contact, and power is transmitted by means of a magnetic coupling effect; the first rotor is provided with a small number of magnetic poles, the first stator is provided with a large number of magnetic poles, magnets of the first stator and the first rotor are arranged in the form of a Halbach array, the modulation ring is formed by alternate arrangement of the modulation teeth made from a high-magnetic-permeability material and the cage made from a non-magnetic material; the first stator concentrates the magnetic flux inwardly, the first rotor concentrates the magnetic flux outwardly; the first air gap is formed between the modulation ring and the first stator, and the second air gap is formed between the modulation ring and the first rotor; the first rotor and the second rotor of the motor part are integrated in the axial direction; during operation, the second rotor of the motor drives the first rotor to rotate, magnetic fields generated by the first rotor and the first stator are respectively modulated by the modulation ring to generate a series of spatial harmonic magnetic fields in the first air gap and the second air gap, where asynchronous spatial magnetic fields with the maximum amplitude in the first air gap and the second air gap respectively match the number of pole pairs of the first stator and the number of pole pairs of the first rotor, and a stable output torque is generated on the modulation ring by magnetic field coupling, thereby achieving the effects of speed reduction and torque amplification. Due to the friction-free characteristic of magnetic transmission and the ultra-high torque density achieved by the magnetic flux concentration structure and high-magnetic-permeability material of the present invention, system efficiency is improved, and operating noise is reduced.

**Claims**

1. A magnetic transmission speed-reduction device, comprising a first stator (410), a first rotor (420) and a modulation ring (430), wherein:

   the first stator (410) comprises a first stator magnetic pole assembly (411), and the first stator magnetic pole assembly is used for providing a first stator magnetic field;
   the first rotor (420) comprises a first rotor magnetic pole assembly (421), the first rotor magnetic pole assembly is used for providing a first rotor magnetic field for rotation with the first rotor, and the first rotor (420) is located on an inner side of the modulation ring (430) and is coaxial with the modulation ring;
   the modulation ring (430) is located between the first rotor and the first stator and is coaxial with the first rotor and the first stator, a first air gap (440) is formed between the modulation ring and the first stator, and a second air gap (450) is formed between the modulation ring and the first rotor;
   the first stator (410) and the first rotor (420) are provided with different numbers of pole pairs, such that a magnetic field of the first air gap and a magnetic field of the second air gap are coupled to slow down and output rotation from the first rotor by means of the modulation ring.

2. The magnetic transmission speed-reduction device according to claim 1, wherein a magnetic flux of the magnetic field of the first stator (410) is concentrated inwardly, and a magnetic flux of the magnetic field of the first rotor (420) is concentrated outwardly.

3. The magnetic transmission speed-reduction device according to claim 1 or 2, wherein:

   the first rotor magnetic pole assembly is formed by first rotor permanent magnets (422), which are spliced together after being magnetized one-by-one, with each pole being divided into four said first rotor permanent magnets (422) and a magnetic flux being concentrated outwardly on the whole;
   the first stator magnetic pole assembly is formed by first stator permanent magnets, which are spliced together after being magnetized one-by-one, with each pole being divided into two said first stator permanent magnets which are magnetized radially and tangentially respectively, and a magnetic flux being concentrated inwardly on the whole.

4. The magnetic transmission speed-reduction device according to claim 3, wherein the number of the pole pairs of the first rotor is p1, the first rotor comprises $8 \times p1$ said first rotor permanent magnets, and an angle between magnetization directions of every two adjacent said first rotor permanent magnets is $(45-360/(8 \times p1))°$.

5. The magnetic transmission speed-reduction device according to claim 3, wherein axial projection contours of the first rotor permanent magnets (422) are fan-shaped, the first rotor permanent magnets are identical in size, a radial thickness of the first rotor permanent magnets is H1, a circumferential mean width of the first rotor permanent magnets is W1, and H1/W1=0.8-1.5.

6. The magnetic transmission speed-reduction device according to claim 3, wherein the first stator permanent magnets adopt any one of the following configurations:

   (1) axial projection contours of the first stator permanent magnets are fan-shaped and identical in size, the first stator permanent magnets are divided into radial permanent magnets (412) and tangent permanent magnets (413), the radial permanent magnets are magnetized radially, the tangent permanent magnets are magnetized tangentially, the radial permanent magnets and the tangent permanent magnets are spliced alternately to form the first stator magnetic pole assembly, magnetization directions of every two adjacent said radial permanent magnets are opposite, and magnetization directions of every two adjacent said tangent permanent magnets are opposite; a radial thickness of the first stator permanent magnets is H3, a circumferential mean width of the first stator permanent magnets is W3, and W3/H3=0.52-0.6;

(2) axial projection contours of the first stator permanent magnets are fan-shaped, the first stator permanent magnets are divided into large-sized permanent magnets (414) and small-sized permanent magnets (415), the large-sized permanent magnets are magnetized radially, the small-sized permanent magnets are magnetized tangentially, the large-sized permanent magnets and the small-sized permanent magnets are spliced alternately to form the first stator magnetic pole assembly, magnetization directions of every two adjacent said large-sized permanent magnets are opposite, and magnetization directions of every two adjacent said small-sized permanent magnets are opposite; an included angle between two radial edges of each of the small-sized permanent magnets is D2, and a radial thickness of the small-sized permanent magnets is H5; an included angle between two radial edges of each of the large-sized permanent magnets is D3, and a radial thickness of the large-sized permanent magnets is H6; 1.5<D3/D2<2.2, 0.4<H6/H5<0.6;

(3) axial projection contours of the first stator permanent magnets are triangular, the first stator permanent magnets are divided into angular centripetal permanent magnets (416) and edge centripetal permanent magnets (417), the edge centripetal permanent magnets are magnetized radially, the angular centripetal permanent magnets are magnetized tangentially, the angular centripetal permanent magnets and the edge centripetal permanent magnets are spliced alternately to form the first stator magnetic pole assembly, magnetization directions of every two adjacent said angular centripetal permanent magnets are opposite, magnetization directions of every two adjacent said edge centripetal permanent magnets are opposite, edges of the angular centripetal permanent magnets form an outer edge of the first stator magnetic pole assembly, edges of the edge centripetal permanent magnets form an inner edge of the first stator magnetic pole assembly, and adjacent edges of the angular centripetal permanent magnets and the edge centripetal permanent magnets have a same length and are completely aligned; an outer diameter of the first stator is d5, an inner diameter of the first stator is d4, the number of the pole pairs of the first stator is p3, and $0.8 \times d4 \times \sin(360\deg/4p3) < d5 - d4 < 0.9 \times d4 \times \sin(360\deg/4p3)$.

7. The magnetic transmission speed-reduction device according to claim 1 or 2, wherein the modulation ring (430) comprises modulation teeth (435), and the modulation teeth (435) are made from a material with a high saturation magnetic flux density.

8. The magnetic transmission speed-reduction device according to claim 7, wherein the modulation ring (430) comprises a cage (431), the cage comprises two end plates (432) and a plurality of connecting rods (433) connected between the two end plates, the connecting rods extend in an axial direction and distributed in a circumferential direction, and each of the modulation teeth (435) is fixed in a gap between two adjacent said connecting rods (433).

9. The magnetic transmission speed-reduction device according to claim 7, wherein the modulation teeth (435) are identical in size, the total number of the modulation teeth is p2, axial projection contours of the modulation teeth are fan-shaped, an included angle between two radial edges of each of the modulation teeth is D1, and D1/(360deg/p2) =0.5-0.6; a radial thickness of the modulation teeth is H2, a circumferential mean width of the modulation teeth is W2, and H2/W2=0.55-1.3.

10. The magnetic transmission speed-reduction device according to claim 7, wherein:the connecting rods (433) are cylindrical, arc grooves are formed in middle positions of two circumferential sides of each of the modulation teeth (435), and the arc grooves are attached to surfaces of the connecting rods, such that the connecting rods and the cylindrical connecting rods are mutually supported.

11. The magnetic transmission speed-reduction device according to claim 7, wherein:the number of the pole pairs of the first rotor is p1, the total number of the modulation teeth is p2, the number of the pole pairs of the first stator is p3, and p1=|p2-p3|.

12. The magnetic transmission speed-reduction device according to claim 1, wherein the first stator (410) is fixed in a motor housing (100), and a shielding ring (105) is inlaid in an inner wall of the motor housing to reduce flux leakage from the motor housing.

13. The magnetic transmission speed-reduction device according to claim 12, wherein a thickness H4 of the shielding ring, an outer diameter d1 of the first rotor, an inner diameter d5 of the shielding ring and the number p1 of the pole pairs of the first rotor satisfy the following formulae:

$$d5-d1<d1\times\sin(360\deg/4p1), 4\geq0.185\times d1\times(1+\sin(360\deg/4p1))-0.5\times d5.$$

14. The magnetic transmission speed-reduction device according to claim 12, wherein:the shielding ring (105) is divided into N segments in an axial direction, an axial length of each said segment of the shielding ring is L1, an axial length of the first stator magnetic pole assembly is L, all the segments of the shielding ring are uniformly distributed in the axial direction, an end of the shielding ring is aligned with the first stator magnetic pole assembly, a distance between end surfaces, close to each other, of every two said segments of the shielding ring is (L-N*L1)/(N-1), and L1>0.65*(L/N), N<10.

15. A mid-drive motor for a power-assisted bicycle, comprising:

a motor housing (100);
a torque assembly (200), penetrating through the motor housing and having two ends extending out of the motor housing to receive an external torque;
a motor part (300), comprising a second stator (310) and a second rotor (320), wherein the second stator comprises a core (311) attached into the motor housing and a winding (312) wound around the core, the winding generates a rotational magnetic field when energized, the second rotor (32) is used for providing a permanent magnetic field matched with an electromagnetic field generated by the stator winding, the second rotor (320) is located on an inner side of the second stator (310) and is coaxial with the second stator, and a third air gap (330) is formed between the second rotor and the second stator;
the magnetic transmission speed-reduction device (400) according to any one of claims 1-14, wherein the first rotor (420) is driven by the second rotor (320) to rotate synchronously; and
a bidirectional clutch (500), arranged between the torque assembly (200) and the modulation ring (430), wherein a torque is transmitted to the bidirectional clutch by either the torque assembly or the modulation ring, the bidirectional clutch is provided with a cylindrical output shaft (501) used for outputting the torque and extending out of the motor housing, and the cylindrical output shaft is disposed around a radial outer side of an end of the torque assembly (200).

16. The mid-drive motor for a power-assisted bicycle according to claim 15, wherein the mid-drive motor comprises a sensor (601) and a controller (602), and the controller instructs the motor part to work on the basis of a torque signal provided by the sensor.

17. The mid-drive motor for a power-assisted bicycle according to claim 16, wherein a stationary inner housing (106) is disposed outside the torque assembly (200), and the sensor (601) is arranged in the inner housing and used for detecting the torque signal and receiving a pedaling drive torque.

18. The mid-drive motor for a power-assisted bicycle according to claim 15, wherein the bidirectional clutch (500) comprises an inner sleeve (502), an outer sleeve (503), a plurality of first clutch members (504) and a plurality of second clutch members (505), the inner sleeve (502) is disposed on the torque assembly (200) and rotates together with the torque assembly, the outer sleeve (503) is disposed on the modulation ring (430) and rotates together with the modulation ring, the cylindrical output shaft (501) is disposed around a radial outer side of the inner sleeve (502), the outer sleeve (503) is disposed around a radial outer side of the cylindrical output shaft (501), the plurality of first clutch members (504) are distributed between the cylindrical output shaft (501) and the inner sleeve (502), and the plurality of second clutch members (505) are distributed between the cylindrical output shaft (501) and the outer sleeve (503); the first clutch members (504) and the second clutch members (505) are arranged oppositely.

19. The mid-drive motor for a power-assisted bicycle according to claim 15, wherein the torque assembly (200) comprises a motor shaft (201) and a torque sleeve (202) disposed around the motor shaft and rotating together with the motor shaft.

20. The mid-drive motor for a power-assisted bicycle according to claim 15, wherein the second rotor (320) comprises a second rotor core (326) as well as main magnets (322) and auxiliary magnets (323) which are alternately arranged on a circumference of the second rotor core (326), the main magnets are magnetized tangentially, the auxiliary magnets are magnetized radially, and the second rotor core (326) is provided with spacing magnetic bridges (324) located between the main magnets and the auxiliary magnets and used for isolating the main magnets from the auxiliary magnets.

21. The mid-drive motor for a power-assisted bicycle according to claim 15, wherein the second rotor core (326) is provided with a rotor inner magnetic bridge (325) located on inner circumferences of the main magnets and the auxiliary magnets.

22. The mid-drive motor for a power-assisted bicycle according to claim 15, wherein the main magnets (322) and the auxiliary magnets (323) are inlaid in the second rotor core (326).

23. The mid-drive motor for a power-assisted bicycle according to claim 20, wherein two shoe portions extend out from positions, corresponding to two vertexes close to the third air gap of each said main magnet, of the second rotor core (326) and form a semi-open main magnet mounting groove.

24. The mid-drive motor for a power-assisted bicycle according to any one of claims 20-23, wherein axial projection contours of the main magnets (322) are rectangular, axial projection contours of the auxiliary magnets (323) are fan-shaped, the auxiliary magnets are located at inner positions in a radial direction, and a width w1 of the main magnets, a radial length h1 of the main magnets, a width w5 of inner edges of the auxiliary magnets, a radial length h2 of the auxiliary magnets and a width w2 of the magnetic bridges between the main magnets and the auxiliary magnets satisfy: $1.2 < w1/w5 < 2.2$, $1.5 < h1/h2 < 2.4$, $0.08 < w2/w1 < 0.15$.

25. The mid-drive motor for a power-assisted bicycle according to any one of claims 20-23, wherein axial projection contours of the main magnets are rectangular, axial projection contours of the auxiliary magnets are rectangular, and the auxiliary magnets are located at inner positions in the radial direction.

26. The mid-drive motor for a power-assisted bicycle according to any one of claims 20-23, wherein axial projection contours of the main magnets are rectangular, axial projection contours of the auxiliary magnets are fan-shaped, and a radial length of the auxiliary magnets is equal to that of the main magnets.

27. The mid-drive motor for a power-assisted bicycle according to any one of claims 20-23, wherein a material grade of the main magnets is higher than that of the auxiliary magnets.

28. The mid-drive motor for a power-assisted bicycle according to any one of claims 20-23, wherein stator teeth (313), which are distributed uniformly and have a same width, are formed on the second stator core (311), and a winding slot (314) is formed between every two adjacent said stator teeth and provided with a stator slot (315) facing the third air gap (330); the number of pole pairs of a magnetic field generated by the winding is P1, the number of the stator teeth is P2, the number of pole pairs of the second rotor is P3, and P1+P3=P2.

29. The mid-drive motor for a power-assisted bicycle according to claim 28, wherein stator shoe portions (316), extending towards the stator slots (315), are arranged at positions, close to the third air gap, of the stator teeth (313).

30. The mid-drive motor for a power-assisted bicycle according to any one of claims 15-23, wherein the first rotor (420) and the second rotor (320) are both arranged on a cylindrical rotor shaft (700), and the cylindrical rotor shaft (700) is disposed around a radial outer side of the torque assembly.

31. The mid-drive motor for a power-assisted bicycle according to any one of claims 15-23, wherein the motor part (300) and the magnetic transmission speed-reduction device (400) are coaxially connected in series in an axial direction.

32. The mid-drive motor for a power-assisted bicycle according to any one of claims 15-23, wherein the motor part (300) and the magnetic transmission speed-reduction device (400) are partially overlapped in the axial direction, and the motor part is disposed in the speed-reduction device.

33. The mid-drive motor for a power-assisted bicycle according to any one of claims 15-23, wherein the motor part (300) and the magnetic transmission speed-reduction device (400) are partially overlapped in the axial direction, and the entire motor is disposed in the speed-reduction device.

FIG. 1

FIG. 2

FIG. 3

FIG. 4

FIG. 5

FIG. 6

FIG. 7

FIG. 8

FIG. 9

FIG. 10

FIG. 11

FIG. 12

FIG. 13

416

417

FIG. 14

416

417

FIG. 15

415    414    H5

H6

D3    D2

FIG. 16

415    414

FIG. 17

FIG. 18

FIG. 19

FIG. 20

FIG. 21

FIG. 22

FIG. 23

322

323

326

FIG. 24

421

422

d1

FIG. 25

FIG. 26

FIG. 27

FIG. 28

FIG. 29

FIG. 30

FIG. 31

FIG. 32

430

431

432

432

433

435

**FIG. 33**

500

503

**FIG. 34**

500

J

J

FIG. 35

K

505

503

501

502

504

K

FIG. 36

FIG. 37

FIG. 38

FIG. 39

FIG. 40

FIG. 41

## INTERNATIONAL SEARCH REPORT

| International application No. |
|---|
| **PCT/CN2024/107276** |

| A. | CLASSIFICATION OF SUBJECT MATTER |
|---|---|

H02K49/10(2006.01)i; H02K1/17(2006.01)i; H02K1/2783(2022.01)i

According to International Patent Classification (IPC) or to both national classification and IPC

| B. | FIELDS SEARCHED |
|---|---|

Minimum documentation searched (classification system followed by classification symbols)

IPC:H02K

Documentation searched other than minimum documentation to the extent that such documents are included in the fields searched

Electronic data base consulted during the international search (name of data base and, where practicable, search terms used)

CNABS, CNTXT, ENTXTC, VEN, CNKI, IEEE: 磁, 减速, 变速, 调速, 定子, 转子, 调制, 调磁, 环, 海尔贝克, 海氏, 离合, magnetic, speed reducing, stator, rotor, modulation, ring, halbach, clutch

| C. | DOCUMENTS CONSIDERED TO BE RELEVANT |
|---|---|

| Category* | Citation of document, with indication, where appropriate, of the relevant passages | Relevant to claim No. |
|---|---|---|
| X | CN 106787609 A (HUAZHONG UNIVERSITY OF SCIENCE AND TECHNOLOGY) 31 May 2017 (2017-05-31) description, paragraphs 28-46, and figures 1-4 | 1-3, 7, 12 |
| Y | CN 106787609 A (HUAZHONG UNIVERSITY OF SCIENCE AND TECHNOLOGY) 31 May 2017 (2017-05-31) description, paragraphs 28-46, and figures 1-4 | 8, 15-17, 19, 30-33 |
| Y | TW I718839 B (NATIONAL YUNLIN UNIVERSITY OF SCIENCE AND TECHNOLOGY) 11 February 2021 (2021-02-11) description, paragraphs 20-52, and figures 1-14 | 8, 15-17, 19, 30-33 |
| Y | CN 117097057 A (JIANDE WUXING BICYCLE CO., LTD.) 21 November 2023 (2023-11-21) description, paragraphs 26-51, and figures 1-4 | 15-17, 19, 30-33 |
| A | CN 106685182 A (HARBIN INSTITUTE OF TECHNOLOGY) 17 May 2017 (2017-05-17) entire document | 1-33 |

☑ Further documents are listed in the continuation of Box C.    ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

"T" later document published after the international filing date or priority date and not in conflict with the application but cited to understand the principle or theory underlying the invention

"X" document of particular relevance; the claimed invention cannot be considered novel or cannot be considered to involve an inventive step when the document is taken alone

"Y" document of particular relevance; the claimed invention cannot be considered to involve an inventive step when the document is combined with one or more other such documents, such combination being obvious to a person skilled in the art

"&" document member of the same patent family

| Date of the actual completion of the international search | Date of mailing of the international search report |
|---|---|
| **18 February 2025** | **24 February 2025** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| | International application No. |
|---|---|
| | **PCT/CN2024/107276** |

### C.    DOCUMENTS CONSIDERED TO BE RELEVANT

| Category* | Citation of document, with indication, where appropriate, of the relevant passages | Relevant to claim No. |
|---|---|---|
| A | WO 2023125386 A1 (GUANGDONG MIDEA WHITE HOUSEHOLD APPLIANCE TECHNOLOGY INNOVATION CENTER CO., LTD. et al.) 06 July 2023 (2023-07-06) entire document | 1-33 |

Form PCT/ISA/210 (second sheet) (July 2022)

**INTERNATIONAL SEARCH REPORT**
Information on patent family members

International application No.

**PCT/CN2024/107276**

| Patent document cited in search report | | | Publication date (day/month/year) | Patent family member(s) | | | Publication date (day/month/year) |
|---|---|---|---|---|---|---|---|
| CN | 106787609 | A | 31 May 2017 | None | | | |
| TW | I718839 | B | 11 February 2021 | TW | 202126929 | A | 16 July 2021 |
| CN | 117097057 | A | 21 November 2023 | CN | 221042459 | U | 28 May 2024 |
| CN | 106685182 | A | 17 May 2017 | None | | | |
| WO | 2023125386 | A1 | 06 July 2023 | CN | 114337187 | A | 12 April 2022 |

Form PCT/ISA/210 (patent family annex) (July 2022)